# EUROPEAN PATENT APPLICATION

(11) **EP 4 201 827 A1**
(43) Date of publication of application: **28.06.2023**
(21) Application number: 21216294.5
(22) Date of filing: 21.12.2021
(51) Int. Cl.: B65B 61/20, B65B 61/26, G06Q 30/02, B65B 57/10, B65B 5/00, B65B 59/00, G06Q 10/08

(54) **A METHOD OF PACKAGING A PRODUCT INTO A PACKAGING MEANS**

(71) Applicant: Pennyblack BV, 2018 Antwerpen (BE)
(72) Inventor: VERBRUGGHE, Sam, 2640 Mortsel (BE); DOUGLAS, Franklin, 2018 Antwerpen (BE)
(74) Representative: Van Garsse, Joris Marc H

(57) **Abstract**

A method for packaging a first product (P1, 105) into a packaging means (350) comprising the following step:
- selecting (701) from a first data-source (S1, 110) a first content (C₁) of a first set of data-items (Dt_{1, 1..n}) related to the first product (P1, 105);
- determining (702) from a second data-source (S2, 210) a second product (P2, 205) wherein the second data-source (S2, 210) comprises one or more layout schemes (L_{1..p}) and a second set of data-items (Dt_{2,1..m}) related to the second product (P2, 205);
- selecting (703) from the second data-source (S2, 210) a layout scheme (Lᵢ) of the set of layout schemes (L_{1..p}); and a second content (C₂) of the second set of data-items (Dt_{2,j1..m});
- adding (706) to the packaging means (350) with the first product (P1, 105) a digital printed document (320, D_{printed}) comprising at least a part of the first content (C₁) and at least a part of the second content (C₂) arranged according to the selected layout scheme (Lᵢ);
wherein the second product (P2, 205) is determined by one or more data-items of the first set of data-items (Dt_{1, 1..n}) occurring in the second set of data-items (Dt_{2,1..m}).

## Description

### Technical Field

The present invention relates to packaging a product into a packaging means, such as a packaging box or bag for e-commerce-systems and the use of digital printer therein.

### Background Art

The role of e-commerce is becoming more and more significant in retail. Customers are increasingly placing orders online from the comfort of their homes via a portal of an e-commerce-system. The product of the placed order is put into a packaging box at a packaging line and then delivered to the customer's residence or even another desired address if it was available in the placed order.

But hereby the contact between customers and the manufacturers / sellers of ordered products decreases so there is a need to investigate in some way to maintain and enhance customer experience and customer engagement.

For example, WO2021180346 A1 (AGFA NV) discloses a method of preparing a packaging box wherein late stage customization is provided on the inside of the packaging box. Late stage customization is provided on a folded packaging box. Late stage customization is provided by a printing method. The late stage customization is based on data items related to the placed order and /or product of the placed order which (in)directly are known by the customer.

To enhance more the customer experience and customer engagement, they should benefit also from other products that they can buy so there remains a need for an approach in which e-commerce-systems can deliver packaging boxes with enhanced customer experience and customer engagement.

### Summary of invention

It is an object of the present invention to provide a method for packaging a product (P1, 105) into a packaging means (350) for enhancing the experience for the customer (101). A packaging means (350) is preferably a packaging box which is made of packaging material which is cut; glued and or crusted.

An apparatus provided with one or more operating stations configured to perform cutting; gluing and/or creasing on packaging material is well-known to the person skilled in packaging. Such 'box-on-demand' packaging machines are exemplified by WO2016/203343 A (PANOTEC) and EP2697124 A (BOSCH).

It was found that adding to the packaging means (350) printed content of another product which has similarities with the placed order and/or the product of the placed order results in an enhancement of customer experience and customer engagement.

These and other objectives will become apparent from the description hereinafter.

### Brief description of drawings

FIG.1 illustrates a flow-chart of a preferred embodiment of the invention wherein steps are performed sequential.
FIG. 2 illustrates several components and steps that are used to perform a preferred embodiment of the invention.

### Detailed description of the invention

A preferred embodiment is a method for packaging a first product (P1, 105) into a packaging means (350) comprising the following step:
- selecting (701) from a first data-source (S1, 110) a first content (C₁) of a first set of data-items (Dt_{1, 1..n}) related to the first product (P1, 105);
- determining (702) from a second data-source (S2, 210) a second product (P2, 205) wherein the second data-source (S2, 210) comprises one or more layout schemes (L_{1..p}) and a second set of data-items (Dt_{2,1..m}) related to the second product (P2, 205);
- selecting (703) from the second data-source (S2, 210) a layout scheme (Lᵢ) of the set of layout schemes (L_{1..p}); and a second content (C₂) of the second set of data-items (Dt_{2,j1..m});
- adding (706) to the packaging means (350) with the first product (P1, 105) a digital printed document (320, D_{printed}) comprising at least a part of the first content (C₁) and at least a part of the second content (C₂) arranged according to the selected layout scheme (Li);
wherein the second product (P2, 205) is determined by one or more data-items of the first set of data-items (Dt_{1, 1..n}) occurring in the second set of data-items (Dt_{2,1..m}).

In the art the process of crating a packaging box / bag, also called shipping box / bag, is called 'packing'. Packing is referred to as the process of collecting products for a specific order, packing is the process of folding and filling of a shipping box / bag containing the ordered products.

Packaging means (350) may be a packaging box, a bag or wrapping paper.

The first set of data-items (Dt_{1, 1..n}) related to the first product (P1, 105) preferably contains order data and customer data if the first product (P1, 105) is ordered e.g. by an e-commerce-system (100).

The second set of data-items (Dt_{2, 1.m}) contains preferably content of product information of the second product (P2, 205).

If there is a campaign for the second product the second set of data-items (Dt_{2, 1.m}) may also contain content of event data, launch data, specialized offers, even third party advertisement or (soft) marketing messages (jokes, riddles...) or community related messaging.

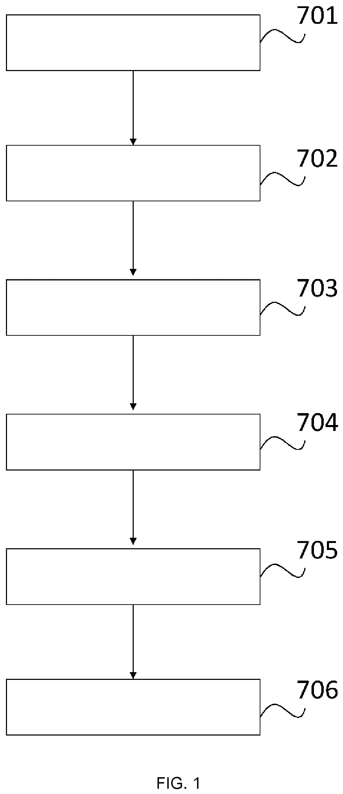

In a preferred embodiment the previous steps from 701 to 706 are performed sequentially as illustrated in Fig. 1.

Each data-item of a product contains a content with a certain type such as a string, an image, a number, a character, a range, a counter, an area-location.

The document (D, 235) is generated (704) comprising at least a part of the first content (C₁) and at least a part of the second content (C₂) arranged according to the selected layout scheme (Li); preferably by the e-process-system and digital printed (705) preferably at the packaging line (300).

The first data-source (S1, 110) comprises set of data-items from sellable products that are offered preferably on an e-commerce-system (100) and the second data-source (S2, 210) comprises also set of data-items of other products. The second data-source (S2, 210) comprises set of data-items of other products that are preferably accessible by an e-process-system (200). The first data-source (S1, 110) and second data-source (S2, 210) can be the same but for privacy reasons this is not preferred. The first data-source (S1, 110) is for customers and the second data-source (S2, 210) is for sellers of other products (201) or manufacturers of other products, also called merchant users. For clarity the first product (P1, 105) and second product (P2, 205) are different products.

By combining on the digital printed document parts of both contents from set of data-items for different products the customer (101) benefits in a better customer experience and customer engagement. So the customer becomes aware of additional content of the second product (P2, 205) when he unpacks the packaging means. It is the use of a digital printed document (320, D_{printed}) which enhances the customer experience or customer engagement.

An embodiment of the present invention is a packaging means (350) obtained by the packaging method. Preferably the packaging means (350) is a corrugated box and more preferably a corrugated box manufactured according to the dimensions of the first product (P1, 105).

Preferably, the first product (P1, 105) is selected by a customer (101) in an e-commerce-system (100) and wherein one or more data-items of the first set of data-items (Dt_{1, 1..n}) are determined by the customer (101) for example name of the product, product-id, delivery address (405), number of products, language, gender, title...

The packaging means may also be a bag more preferably a pastic bag, most preferably a bio-degradable plastic bag as long it is suitable for sending the bag with the first product and document to the customer.

### E-commerce-system / e-process-system

An e-process-system (200) is a system that accesses a data-source by a cloud computing platform with computing power by shared computer resources.

A well-known e-commerce-system (100) is for example offered by Amazon^{™} or eBay^{™} but nowadays also smaller firms offer also an online web-shop for example by using e.g. Shopify^{™}-platform.

Amazon is also commercialising a cloud computing platform with "Amazon Web Services" (AWS) to configure e-process-systems (200). With API's the platform makes the access to in the cloud stored data-sources efficient as for example is disclosed in US11102214 B2 (AMAZON TECHNOLOGIES INC). Cloud computing is on-demand availability of computer system resources, especially data storage (cloud storage) and computing power, preferably without direct active management by the user. Large clouds may often have functions distributed over multiple locations Preferably such location is a data center.

In the present embodiment and preferred embodiments, the first data-source (S1, 110) is preferably accessible by an e-commerce-system (100) and the second data-source (S2, 210) is preferably accessible by an e-process-system (200) which is more preferably an e-marketing system wherein merchant users (= sellers of products or manufacturers of products, 201) setup a campaign for a product promotion with a set of data-items and optionally a set of layout schemes.

Some of said cloud computing platforms have also e-commerce site builders with hundreds of templates so with no coding skills a seller or manufacturer of products can easily create its own e-commerce-system.

Said platforms provide mainly also a variety of basic abstract technical infrastructure and distributed computing building blocks and tools. Customers may access the cloud environment via one or more web services accounts from the cloud computing platform. The access is possible via a so-called portal. Access is also possible with a so-called CLI (= command-line interface) commonly referred to as "programmatic access". A portal maybe a web-page which uses such CLI to access data-storage for viewing data from it on the web-page.

Most cloud computing platforms are typically using "pay-as-you-go' model.

An e-process-system (200) may comprise:
- a front-office component whereby an user can access the data-source for input or output or view content of the data-source mainly via a portal; the user may receive messages from a back-end component e.g. for informing that a task is performed.
- the back-end component with application programming interfaces (API's) and tools to support the front-office component and other components.

### Data-sources

The data-sources in the present embodiment and preferred embodiments are stored on one or more computer resources and preferably accessible by a cloud computing platform. The data-sources of the present embodiment comprise virtual products with related set of data-items.

For the first data-source (S1, 110) the products may be ordered via the e-commerce-system. The content of the set of data-items related to the first product (P1, 105) may contain also the content of the order of the first product (P1, 105) such as the delivery address (405), name of the customer, the number of product, language, address of the customer... The content of the set of data-items related to the first product (P1, 105) may thus contain content of the product, customer information and order information of the ordered product so the document may also contain the invoice for the ordered first product and/or the shipping details for the delivery service of the packaging means.

For the second data-source (S2, 210) the products are commercially available but not necessarily via said e-commerce-system (100). To access the second data-source (S2, 210) an e-process-system (200) is used.

All server side components of said e-process-system (200) may be built on top of AWS ("Amazon Web Services") serverless technology such as API Gateway, Lambda... preferably using Python 3 for development and Terraform for infrastructure-as-code. Client side features may be exposed in the form of a web application built with the ReactJS library. React (also known as React. js or ReactJS) is a free and open-source front-end JavaScript library for building user interfaces based on UI components.

For example, a seller (201) or manufacturer of products, a so called merchant user, may start a campaign to promote a new product and add his product and related content in the second data-source. If there is a similarity with an ordered first product (P1, 105) and the second product (P2, 205), the promotion of the second product (P2, 205) with a digital printed document (320, D_{printed}) may be added to the packaging means (350) for the first product (P1, 105). The customer (101) receives the promotion of the second product (P2, 205) while unpacking the packaging means. By combining on the digital printed document (320, D_{printed}) parts of both contents from set of data-items for different products the customer (101) benefits in a better customer experience and customer engagement. In said example, the access for such second data-source (S2, 210) is done by a e-process-system which can be called a e-marketing system for this example.

The following components may be part of said e-process-system (200)
- Front-office component: The front-office is a modular web application that provides merchant users access to the campaign management module and reporting module. This may be a single page application (SPA), composed of a React JS front-end and AWS Lambda based back-end that communicate through a RESTful API (JSON over HTTPS) wherein all traffic is authenticated, leveraging AWS Cognito as Identity Provider (OpenID Connect Authorization Code Flow + PKCE). The component is preferably multi-tenant, exposing only the data of the merchant linked to the logged in user.
- Back-end component: This is a pure back-end component (215), not exposing a user interface. It exists of 3 sub-components: the engine itself, an API for determination of the second product (P2, 205) based on one or more data-items of the first set of data-items (Dt_{1, 1..n}) occurring in the second set of data-items (Dt_{2,1..m}); and an API endpoint to track users scanning a QR code that is applied on the document; an API to link with one or more e-commerce-systems where the first product (P1, 105) can be ordered. The API is preferably independent the e-commerce platform that is behind the e-commerce-system. The back-end component has preferably also an API to link with one or more packaging lines for example to start the printing of the document when the first product (P1, 105) is arrived at the packaging line (300). The e-process-system may even control the packaging line (300) with a warehouse logistics component for example to query the amount of ink or number of sheets available at the packaging line (300).

The determination of the second product (P2, 205) is preferably based on a similarity of the first set of data-items and the second set of data-items. A similarity check may be done by comparing one or more of said data-items.

In a preferred embodiment is a type of a data-item (Dt_{2,j}) of the second set of data-items (Dt_{2, 1..m}) a counter-type and wherein the data-item (Dt_{2,j}) is amended by a difference of minimum one when receiving a message from the packaging line (300) that the packaging of the first product (P1, 105) is finished.

The type of a data-item (Dt_{2, j}) may also be:
- a range-type and wherein the second product (P2, 205) is determined by a data-item (Dt_{1, k}) of the first set of data-items (Dt_{1, 1..n}) which is within the range of the data-item (Dt_{2,j}) of the second set of data-items (Dt₂, ₁..ₘ) *(e.g. 6 in the range [0.. 10]*); or
- a string-type and wherein the second product (P2, 205) is determined by a data-item (Dt_{1, k}) of the first set of data-items (Dt_{1, 1..n}) which is at least part of the string of the data-item (Dt_{2,j}) of the second set of data-items (Dt₂, _{1..m}) (*e.g. "bel" in the string "belgium; belgique, belgië"*); or
- an area-location-type and wherein the second product (P2, 205) is determined by a data-item (Dt₁, ₖ) of the first set of data-items (Dt_{1, 1..n}) which is within the area-location of the data-item (Dt_{2,j}) of the second set of data-items (Dt₂, _{1..m}) (*e.g. city Houston in the state Texas of USA*).

The first content of the embodiment and preferred embodiments may include customer information, such as given name, delivery address (405)....

### Layout scheme (Lᵢ)

The set of data-items of the second product (P2, 205) and one or more layout schemes are stored in the second data-source (S2, 210).

The one or more layout scheme is used to layout content data from the set of data-items related to the second product (P2, 205) and also content from the set of data-items related to the first product (P1, 105).

Determining one of said layout schemes depends for example on the maximum print width of the digital printer or it depends on the digital printing technology: e.g. color or black. There may be a layout scheme for a plurality of languages wherefrom the layout scheme is determined which corresponds to the language of the customer who ordered the first product (P1, 105). The elements in a layout scheme may of course also be translated via a translator such as Google Translate so only one layout scheme is needed for any language.

The layout schemes may have different dimensions depending on the packaging means (350) wherein the first product (P1, 105) shall be delivered but preferably the dimensions of the layout scheme are automatically adaptable when the dimensions of the printable area are known.

A layout scheme may have one or more spaces wherein content can be added. This content may be text, vector graphics or even images. In the present invention it is at least part of content of the first content and at least part of the second content which is arranged according to the layout. After the adding of content, a document, preferably in a page description language format, can be generated having the layout as the layout scheme. If the content is text it may before a document is generated, be translated e.g. by Google Translate.

The document preferably comprises personal content of the customer who ordered the first product (P1, 105). For privacy reasons some personal content may never be used in the document.

The document may also comprise content from the merchant user for example an URL of his website or an URL that refers to the second product (P2, 205). Another content that may be provided in the document is a machine-readable optical code that may be scanned for tracking the packaging means (350) or for providing additional information of the first product (P1, 105) or second product (P2, 205) when scanned or for acknowledging the e-commerce-system and/or the e-process-system that the first product (P1, 105) is packed and ready for sent. The generation of such optical code is preferably done by the e-process-system which has access to the set of data-items of the ordered product and the second product (P2, 205).

Such layout schemes are well known by the skilled person. A layout scheme is sometimes called "a template". For example, CHILI Publish provides solutions for creation such layout schemes such as the CHILI Publish extension for Adobe^{™} Indesign.

The design of layout schemes may be performed offline but preferably the layout designer application is part of e-process-system where it is driven by computing power with shared resources whereby the designer or merchant users can visualize a layout scheme whether or not filled with at least part of the first and second content and/or having a machine-readable optical code.

### Document (D, 235)

The document, preferably defined in a page description language format such as PDF, comprises content with a relation to the second product (P2, 205) and content with a relation to the first product (P1, 105) after the generation (704) by a document creator which receives the layout scheme (Lᵢ), the first content (C₁) and second content (C₂). The document creator arranges according to the layout scheme (Lᵢ), at least part of the first content (C₁) and at least part of the second content (C₂) to the document (D, 235). All printable page elements in the document (D, 235) are thus arranged according to the determined layout scheme. The document (D, 235) is preferably stored in the second data-source (S2, 210).

In the present embodiment and preferred embodiments, the document (D, 235) is digital printed (705). The digital printed document (D_{printed}) is preferably added on the packaging means:
- by printing the document on a sheet which is then added inside and/or outside the packaging means; or
- by directly printing on the packaging means (350) ; or
- by printing the document on a sheet which is then added on the first product (P1, 105) while packaging; or
- by directly printing on the first product (P1, 105) while packaging.

The sheet may be any flat recording medium such as paper but it may also be sticky label that is glued on the packaging means (350) or first product (P1, 105)

If the document (D, 235) is stored on the second data-source(S2, 210), it is rendered and transferred to a digital printer for printing. If the document (D, 235) is printed a message to the e-process-system may be sent to inform the first product (P1, 105) is ready for packaging.

The document may comprise a machine-readable optical code, such as QR-code, having content for tracking the packaging means; acknowledging the e-process-system or e-commerce-system that the first product (P1, 105) is packed with the added digital printed document (320, D_{printed}).

The content of the optical code may for example comprise a URL of the e-commerce-system or the e-process-system or an URL of a website of the merchant user.

The step of generating the digital printed document (320, D_{printed}) is preferably performed during packaging of the first product (P1, 105) so the latest information is gathered on the digital printed document (320, D_{printed}). The digital printer is then preferably located at the packaging line (300).

At the packaging line (300) the order is received for packaging the first product (P1, 105) before or during the packaging the document is digital printed and added to the filled or unfilled packaging means. After the filling with the first product (P1, 105), the packaging means (350) is closed and prepared for sending to the customer (101) or delivery address (405) of the order.

The document preferably contains an invoice of the ordered first product (P1, 105) and/or the shipping details for the delivery service (400) of the ordered first product (P1, 105). The content for such invoice or shipping details may be part of the first set of data-items (Dt_{1, 1..n}).

### Page description language (PDL) format

A document may be formatted as a Microsoft Word document but a document may also be stored in contone format such as TIFF or JPG.

Preferably the document is formatted in a page description language (PDL) such as Postscript or Portable Document Format (PDF), both initiated by Adobe^{™}. Using PDL-formatted documents makes the adaptation of page-elements in the document easy such as scaling, color conversion... and last-minute amendment can be done fast and accurate. Also visual checking the document by a designer or merchant user can be done fast.

The document in such page description language format has to be rendered in a raster image processor (RIP) to a file having a contone format or a halftone format that can be transferred to a digital printer.

Sometimes is the RIP an element of the digital printer where the document is rendered to a file in a contone or halftone format which is then transferred to the print technology of the digital printer for printing the document.

### Digital printing

The document may be printed by any type of digital imaging technique (705), preferably selected from the group consisting of laser marking, laser engraving, thermal printing, xerographic printing and inkjet printing for example the digital printer Xerox VersaLink C500.

For printing a document, the document is rendered to a printable format such as a contone format or a halftone format; and transferred to the digital printer. The rendering is preferably done by a raster image processor (RIP) when the document is defined in a page description language format.

The step of digital printing (750) is preferably done at the packaging line (300).

In a preferred embodiment the at least part of the first content (C₁) and/or the at least part of the second content (C₂) are digital printed in colour.

Applying digital a varnish on top of the digital printed document (320, D_{printed}) may enhance the customer experience even more.

### Packaging material / Packaging means

There is no restriction on the packaging material as long as it is suitable to manufacture a packaging means (350) from it. Preferred packaging materials are low cost and lightweight. Lightweight packaging material reduces transportation costs and facilitates the handling during delivery (400) to the customer (101).

The document of the present invention is added to the packaging means. This may be performed before the packaging means (350) is folded or during the manufacturing of the packaging means (350) for example when the packaging means is manufactured according to the dimensions of the first product (P1, 105), as the so-called 'box-on-demand'.

The unfolded packaging means is preferably selected according to a minimal packaging box dimension whereby the minimal packaging means dimension determined based on outer dimension of the first product (P1, 105).

Preferably the following steps in the present embodiment are included:
- selecting a packaging means such as an unfolded packaging box;
- folding the packaging means provided with the printed document (D_{printed});
- packing the first product (P1, 105) with the packaging means;
- closing the filled packaging box.

The time period between a) printing the document and closing the filled packaging means is preferably less than 12 hours, more preferably between 0.1 seconds and 120 minutes and most preferably between 0.1 seconds and 5 seconds.

A particular preferred packaging material is corrugated cardboard as it is low cost and lightweight, but also has the benefit that corrugated cardboard boxes are stackable, making them easy to store and transport.

Corrugated cardboard is a packaging material formed by gluing one or more fluted sheets of paperboard (corrugating medium) to one or more flat sheets (called facings) of linerboard. It comes in four common types:
(1) Single face: one fluted sheet glued to one facing (total two sheets).
(2) Single wall: one fluted sheet sandwiched between two facings (total three sheets); also called double face or single ply.
(3) Double wall: one single-face glued to one single wall so that two fluted sheets are alternatively sandwiched between three flat sheets (total five sheets); also called double cushion or double ply.
(4) Triple wall: two single-face glued to one single wall so that three fluted sheets are alternatively sandwiched between four flat sheets (total seven sheets); also called triple ply

The preferred corrugated cardboard in the present invention is single wall or double wall, more preferably single wall corrugated cardboard as this is sufficiently strong and easy to crease. Single face corrugated cardboard generally has insufficient strength to hold the merchandise articles, while triple wall cardboard is often more difficult to crease into a packaging box.

The strength of cardboard is important for deliverability, as if merchandise doesn't arrive intact in the hands of your customers, you risk your reputation with them.

The cardboard can come in a variety of constructions, such as e.g. honeycomb cardboard, however for easy creasing preferably a cardboard using a paper fluting medium is used.

The paper used in corrugated card board, such as Kraft paper, has often a brownish colour. In a preferred embodiment of the corrugated cardboard, the outer surface of the outer paper liner 11 has a white colour for enhancing the colour vibrancy of the laser marked images thereon. The white colour background contributes to the customer experience as the customer regards this as a more luxurious product.

Another advantage of a paper based cardboard is the recyclability.

Any type of cardboard boxes may be used, such as the Postal box and the American folding box mentioned above. Preferred cardboard packaging boxes are the so-called slotted type boxes, consisting of one piece with a glued, stitched or taped manufacturer's joint and top and bottom flaps. These are shipped flat, ready to use and require closing using the flaps provided. There are several types of such slotted type boxes as discloses in the FEFCO Box Style Guide (category 02 Slotted Type Boxes).

### FIGURE 2

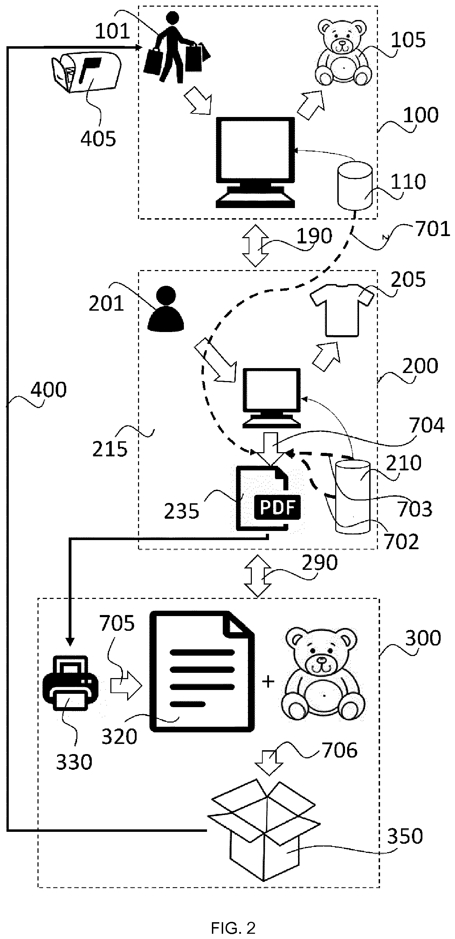

Figure 2 shows an illustrated flow of a preferred embodiment with an e-commerce-system (100) which is connected via an API (190) with an e-process-system which is further connected via a second API (290) with a packaging line (300).

A customer (101) is ordering a certain product: a doll (105). The e-commerce-system controls a data source (110) which contains order information and sellable products via a platform accessible by the illustrated computer.

A seller of other products (201), who wants to start a campaign for cloths for any type of dolls, accesses the e-process-system where he can store layout-schemes, product-information and campaign information on another data source (210) with the illustrated computer.

The data source contains (*not shown*) content of several campaigns inserted by a seller of other products (201) and several layout-schemes (L_{1..p}). By searching similarities between an ordered product in an e-commerce-system (100) and a campaign in the e-process-system (200) and a determination of a layout-scheme (702, 703), a document (235) is generated (704). The document is here illustrated as a PDF-document and it contains (*not shown*)
- determined (701) content (C₁) of the ordered product; and
- determined content (C₂) of the product of the campaign arranged with a determined layout-scheme (Li).

The document (235) is then digital printed (705) on a digital printer (330) when the doll is ready for packaging at the packaging line (300). The operator of the packaging line notifies the e-process-system when the doll is arrived at the packaging line (300). The printed document (320) and the doll is inserted in a packaging means (350) and after closing the packaging means (350), the operator is notifying the e-process-system that the packaging means including the document is ready for sent. By using machine-readable optical codes on the printed document and ordered product, the notification can be simplified by just scanning an optical code whereby the e-process-system (200) / e-commerce-system (100) is notified.

The packaging means with the ordered product (P1) and digital printed document is then delivered (400) to a delivery address (405). The packaging means with and ordered product is sometimes called a parcel.

## Claims

1. A method for packaging a first product (P1, 105) into a packaging means (350) comprising the following step:
- selecting (701) from a first data-source (S1, 110) a first content (C₁) of a first set of data-items (Dt_{1, 1..n}) related to the first product (P1, 105);
- determining (702) from a second data-source (S2, 210) a second product (P2, 205) wherein the second data-source (S2, 210) comprises one or more layout schemes (L_{1..p})and a second set of data-items (Dt_{2,1..m}) related to the second product (P2, 205);
- selecting (703) from the second data-source (S2, 210) a layout scheme (Lᵢ) of the set of layout schemes (L_{1..p}); and a second content (C₂) of the second set of data-items (Dt_{2,j1..m});
- generating (704) a document (D, 235) comprising at least a part of the first content (C₁) and at least a part of the second content (C₂) arranged according to the selected layout scheme (Li);
- digital printing (705) the document (D, 235);
- adding (706) to the packaging means (350) with the first product (P1, 105) the digital printed document (320, D_{printed});
wherein the second product (P2, 205) is determined by one or more data-items of the first set of data-items (Dt_{1, 1..n}) occurring in the second set of data-items (Dt_{2,j1..m}).

2. The method according to claim 1 wherein the document is generated by a document creator which
- receives the layout scheme (Li), the first content (C₁) and second content (C₂), - arranges according to the layout scheme (Lᵢ), the part of the first content (C₁) and the part of the second content (C₂) to the document (D, 235) which is defined in a page description language format; and
wherein the document (D, 235) is stored in the second data-source (S2, 210) with a relation to the second product (P2, 205) and the first product (P1, 105).

3. The method according to claim 2 comprising the step of printing the digital printed document (320, D_{printed}) during packaging of the first product (P1, 105) wherein the stored document (D, 235) is transferred from the second data-source (S2, 210) to and rendered on a digital printer; after receiving a message from the packaging line (300) that the first product (P1, 105) is ready for packaging.

4. The method according to claim 3 wherein the digital printer is located at the packaging line (300).

5. The method according to claim 4 wherein the digital printed document (320, D_{printed}) is added by applying the digital printed document (320, D_{printed}) in the packaging means; on the packaging means; or on the first product (P1, 105).

6. The method according to claim 5 wherein the digital printed document (320, D_{printed}) is an inkjet-printed document; laser-marked document or xerographic-printed document.

7. The method according to claim 6 wherein the part of the first content (C₁) and/or the part of the second content (C₂) are inkjet printed in colour.

8. The method according to any of the claims from 3 to 7 wherein a type of a data-item (Dt_{2,j}) of the second set of data-items (Dt_{2, 1..m}) is a counter-type and wherein the data-item (Dt_{2,j}) is amended by a difference of minimum one when receiving a message from the packaging line (300) that the packaging of the first product (P1, 105) is finished.

9. The method according to any of the claims from 3 to 7 wherein a type of a data-item (Dt_{2,j}) of the second set of data-items (Dt_{2, 1..m}) is a range-type and wherein the second product (P2, 205) is determined by a data-item (Dt_{1, k}) of the first set of data-items (Dt_{1, 1..n}) which is within the range of the data-item (Dt_{2,j}) of the second set of data-items (Dt_{2, 1..m}).

10. The method according to any of the claims from 3 to 7 wherein a type of a data-item (Dt_{2,j}) of the second set of data-items (Dt_{2, 1..m}) is a string-type and wherein the second product (P2, 205) is determined by a data-item (Dt₁, ₖ) of the first set of data-items (Dt_{1, 1..n}) which is at least part of the string of the data-item (Dt_{2,j}) of the second set of data-items (Dt_{2, 1..m}).

11. The method according to any of the claims from 3 to 7 wherein a type of a data-item (Dt_{2, j}) of the second set of data-items (Dt₂, _{1..m}) is an area-location-type and wherein the second product (P2, 205) is determined by a data-item (Dt_{1, k}) of the first set of data-items (Dt₁, _{1..n}) which is within the area-location of the data-item (Dt_{2,j}) of the second set of data-items (Dt_{2, 1..m}).

12. The method according to any of the claims from 1 to 11 wherein the first product (P1, 105) is selected by a customer (101) and wherein one or more data-items of the first set of data-items (Dt_{1, 1..n}) are determined by the customer (101).

13. A packaging means (350) obtained by the packaging method as claimed in any one of claims from 1 to 12.

14. The packaging means (350) according to claim 13 is a corrugated box manufactured according dimensions of the first product (P1, 105).

15. Use of a digital printed document (320, D_{printed}) as obtained in claim 1 in a packaging means (350) for enhancing customer experience or customer engagement.
